(19) Europäisches Patentamt / European Patent Office / Office européen des brevets

(11) **EP 3 857 185 B1**

(12) **EUROPÄISCHE PATENTSCHRIFT**

(45) Veröffentlichungstag und Bekanntmachung des Hinweises auf die Patenterteilung:
**16.02.2022   Patentblatt 2022/07**

(21) Anmeldenummer: **19783216.5**

(22) Anmeldetag: **19.09.2019**

(51) Internationale Patentklassifikation (IPC):
**G01F 23/296** (2022.01)   **G01M 3/24** (2006.01)
**G01N 29/024** (2006.01)   **G01N 29/04** (2006.01)
**G01N 29/07** (2006.01)   **G01N 29/34** (2006.01)
**G01N 29/46** (2006.01)

(52) Gemeinsame Patentklassifikation (CPC):
**G01F 23/2962; G01M 3/243; G01N 29/024;
G01N 29/043; G01N 29/07; G01N 29/348;
G01N 29/46;** G01N 2291/0258; G01N 2291/2636

(86) Internationale Anmeldenummer:
**PCT/EP2019/075139**

(87) Internationale Veröffentlichungsnummer:
**WO 2020/064498 (02.04.2020 Gazette 2020/14)**

(54) **VERFAHREN UND VORRICHTUNG ZUR AKUSTISCHEN MESSUNG IN EINER ROHRLEITUNG**

METHOD AND DEVICE FOR ACOUSTICAL MEASUREMENT IN A PIPE

PROCÉDÉ ET DISPOSITIF POUR LA MESURE ACOUSTIQUE DANS UN TUYAU

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **26.09.2018   DE 102018123797**

(43) Veröffentlichungstag der Anmeldung:
**04.08.2021   Patentblatt 2021/31**

(73) Patentinhaber: **MEOWELL GMBH
98693 Ilmenau (DE)**

(72) Erfinder: **PEYERL, Peter
98693 Ilmenau (DE)**

(74) Vertreter: **Engel, Christoph Klaus
PATENTSCHUTZengel
Marktplatz 6
98527 Suhl (DE)**

(56) Entgegenhaltungen:
EP-A1- 2 169 179        EP-B1- 2 169 179
DE-A1-102004 016 196    DE-A1-102012 101 667
DE-B4-102004 016 196

**Beschreibung**

Die Erfindung betrifft ein Verfahren zur akustischen Messung in bzw. entlang von Rohrleitungen. Insbesondere lassen sich solche Verfahren für die Optimierung der Schallübertragung und Messung von Reflexionen akustischer Signale in bzw. entlang von Rohrleitungen einsetzen. Aus derartigen Signalen können beispielsweise die Position von Leckagen oder Unstetigkeitsstellen in Rohrleitungen, Flüssigkeitsstände in vertikal verbauten Rohrsystemen usw. bestimmt werden.

Zum Themenbereich der Messung von Flüssigkeitsständen in vertikal verbauten Rohren existieren diverse Patentschriften.

Aus der EP 2 169 179 B1 sind ein Verfahren und eine Vorrichtung zur ausschließlichen Erkennung der Spiegelteufe in einem Bohrloch, welches einem vertikal verbauten Rohrsystem entspricht, bekannt. Zur Erkennung der Lage einer Spiegelteufe in einem Bohrloch einer Tiefbohrung wird an der Erdoberfläche ein akustisches Ereignis generiert, welches Druckwellen erzeugt. Die Druckwellen laufen in dem Bohrloch in die Tiefe und werden zumindest auch an der Spiegelteufe reflektiert. Die zur Erdoberfläche zurücklaufenden Druckwellen werden aufgefangen und die Laufzeit seit dem akustischen Ereignis wird gemessen. Die aufgefangenen und gemessenen Druckwellen werden zusammen mit der zugehörigen Laufzeit ausgewertet, woraus auf die Lage der Spiegelteufe geschlossen werden kann. Das akustische Ereignis wird als ein Signalmuster mit einem vorgegebenen, zeitlich veränderlichen Frequenzspektrum erzeugt. Das Signalmuster wird als Schwingungsereignis in das Bohrloch abgestrahlt. Aus den aufgefangenen, reflektierten Signalen werden bei der Analyse Schwingungsereignisse herausgefiltert, die zu dem abgestrahlten Signalmuster korrelieren. Aus den zu dem abgestrahlten Signalmuster korrelierenden Schwingungsereignissen und der Laufzeit seit der Ausstrahlung des Signalmusters wird auf die Lage der Spiegelteufe geschlossen. Die in dieser Druckschrift ebenfalls beschriebene Vorrichtung zur Durchführung des Verfahrens besitzt an der Erdoberfläche eine schwingungsabgebende Einrichtung, die Signalmuster mit einem vorgegebenen, zeitlich veränderlichen Frequenzspektrum erzeugt und in das Bohrloch abstrahlt. Weiterhin sind eine Messeinrichtung zum Empfangen von aus dem Bohrloch stammenden Signalen und eine elektronische Analyseeinheit vorgesehen, die die von der Messeinrichtung aufgefangenen Signale analysiert. Die Analyseeinheit ermittelt die zu den abgestrahlten Signalmustern korrelierenden Schwingungsereignisse und bestimmt die Lage der Spiegelteufe.

Aus der DE 10 2004 016 196 A1 ist ein Verfahren zur zerstörungsfreien Werkstoffprüfung bekannt. Hierbei wird die Erzeugung eines Erregersignals beschrieben. Ziel dieses Verfahrens ist es, unerwünschte Schwingungsmodi des elektromechanischen Systems, insbesondere bei Piezoschwingern, die mehrere Schwingungsmodi besitzen können, durch einen spektral abgestimmten Anregefunktions-Spannungsverlauf zu verringern. Zunächst wird ein breitbandiger Erregerfrequenzbereich festgelegt, in welchem ein Erregersignal erzeugt werden soll. Dies geschieht indem zur Kalibrierung in vorgegebenen Zeitabständen mit einer breitbandigen Anregung erregt und nach Abschalten der Anregung der Rückkopplungsweg frequenzanalysiert wird. Weiterhin werden Störfrequenzen ermittelt und eliminiert.

Weiterhin ist aus der DE 10 2012 101 667 A1 ein Verfahren bekannt, welches ein vibronisches Messgerät zur Bestimmung und/oder Überwachung mindestens einer Prozessgröße eines Mediums in einem Behälter beschreibt. Hierbei besteht die Aufgabe der Vorrichtung darin, die vibronische Bestimmung von Prozessgrößen mit Hilfe einer schwingfähigen Einheit robuster gegenüber dem Einfluss von Fremdvibrationen zu gestalten. Dies geschieht, indem die Regel-/Auswerteeinheit dazu konfiguriert ist, beim Auftreten mindestens einer Fremdvibration in Abhängigkeit der Frequenz und/oder Amplitude der Fremdvibration die Schwingungsanregung derart zu steuern, dass diese Fremdvibration unterdrückt wird. Um diese Fremdvibrationen zu unterdrücken steuert die Regel-/Auswerteeinheit beispielsweise mindestens eine Amplitude und/oder ein die Frequenz derart, dass sich das Nutzsignal von den Fremdvibrationen derart unterscheidet, um von der das Empfangssignal verarbeitenden Elektronik als Nutzsignal erkannt zu werden.

Es ist verständlich, dass derartige akustische Messungen nicht nur in Tiefenbohrungen sondern auch in anderen Anwendungsbereichen ausgeführt werden könnten, beispielsweise wenn mit Luft, anderen Gasen oder auch flüssigen Medien gefüllte Hohlkörper, wie z. B. Rohrleitungen, Parallelrohrwärmetauscher usw. untersucht werden sollen. Im Sinne der vorliegenden Erfindung sind Rohrleitungen grundsätzlich als lang gestreckte weitgehend gleichförmige Hohlräume zu verstehen, in denen sich eine Medium befindet, in welchem sich Schallwellen bzw. akustische Signale ausbreiten können, wobei die Gesamtdämpfung der Signale klein genug sein muss, damit sich die akustischen Signale über die gewünschte Messlänge ausbreiten und zum Sendeort zurückreflektiert werden und dann noch messbar sind. Gerade bei sehr langen Rohren (einige Hundert Meter bis einige Kilometer), bei Rohren mit einer komplizierten, teils sehr unterschiedlichen Geometrie, in Rohren mit vielen möglichen Reflexionsstellen für die Schallwellen, bei Komponenten mit im Raum zwischen einem äußeren und einem inneren Rohr eingekoppelten Signalen und bei starken Störgeräuschen im Rohr oder dessen Umgebung versagen die bisher bekannten Messverfahren jedoch regelmäßig.

Neben Störeinflüssen aufgrund der konstruktiven Besonderheiten (z. B. sprunghaften Durchmesserveränderungen) der zu vermessenden Rohrleitungen kommen bei elektrischen Messverfahren weitere Störgrößen hinzu, die auf elektromagnetische Einstreuungen in die verwendete Sensorik oder in elektrische Leitungen beruhen und die eine empfindliche Messung stark stören oder auch unmöglich machen können.

Eine Aufgabe der vorliegenden Erfindung besteht ausgehend vom genannten Stand der Technik darin, ein verbessertes Verfahren zur akustischen Messung entlang langer Rohrleitungen bereitzustellen, welches auch unter schwierigen Bedingungen zuverlässige Messwerte liefert. Insbesondere soll das Verfahren das Lokalisieren von unbekannten Reflexionsstellen in technischen Hohlkörpern und vorrangig entlang langer Rohrleitungen gestatten, wie beispielsweise fehlerhafte Schweißnähte, Spiegelteufen, Flüssigkeitsstände, Leckagen usw. während bekannte Reflexionsstellen, wie z. B. periodisch wiederkehrende Stöße an Rohrabschnitten, unbewegliche Einbauten in den Hohlkörpern usw. das Messergebnis nicht verfälschen sollen. Dazu wird ein Messverfahren benötigt, welches sich optimal und möglichst einfach an unterschiedliche Bedingungen anpassen lässt. Darüber hinaus soll eine Vorrichtung zur Ausführung eines solchen Verfahrens bereitgestellt werden.

Diese Aufgabe wird durch ein Verfahren zur akustischen Messung in oder entlang langer Rohrleitungen gemäß dem beigefügten Anspruch 1 gelöst. Ebenso wird eine Vorrichtung zur akustischen Messung in einer Rohrleitung gemäß dem beigefügten Anspruch 7 zur Lösung der Aufgabe angegeben.

Das erfindungsgemäße Verfahren zur akustischen Messung in oder entlang einer Rohrleitung startet zunächst mit der Festlegung eines breitbandigen Erregerfrequenzbereichs, in welchem ein Erregersignal erzeugt werden soll. Beispielsweise kann sich der Erregerfrequenzbereich von einer unteren Grenzfrequenz $f_u$ = 5 Hz bis zu einer oberen Grenzfrequenz $f_o$ = 300 Hz erstrecken. Es sind aber auch andere Erregerfrequenzbereiche bis hin zum Ultraschall denkbar. Der konkret geeignete Frequenzbereich hängt von den Eigenschaften des zu untersuchenden Rohres ab.

In einem weiteren Schritt werden Störfrequenzen festgelegt, welche im Erregersignal nicht enthalten sein sollen. Solche Störfrequenzen können sich aufgrund des Aufbaus der zu messenden Rohrleitung und/oder aus den Umgebungsbedingungen ergeben und bekannt sein oder ermittelt werden. Beispielsweise werden regelmäßig die Netzfrequenzen (50 Hz, 60 Hz und Oberwellen dazu) und Umrichterfrequenzen (typisch 20...40 Hz und Oberwellen dazu) betrachtet. Diese bekannten Störfrequenzen können als Vorgabewerte berücksichtigt werden. Weiterhin können Störfrequenzen aufgrund gezielt eingebauter oder periodisch angeordneter Reflektoren entlang der Rohrleitung (z. B. Rohr-Verbindungsstellen) entstehen oder sonstige zyklischen Signale im betrachteten Frequenzbereich auftreten, die als Störfrequenzen festgelegt werden.

Gemäß einer bevorzugten Ausführungsform wird zum Festlegen der Störfrequenzen eine Messung akustischer Störsignale, die z. B. an einer Rohrleitung ohne Einkopplung des Vorläufer- oder Erregersignals als ein Grundgeräusch auftreten, ausgeführt. Die Frequenzen der gemessenen Störsignale oberhalb einer vorbestimmten Störsignalschwelle werden daraufhin als Störfrequenzen festgelegt. In dem gemessenen Störsignal sind sowohl mögliche störende Geräusche als auch störende elektromagnetische Einstreuungen enthalten. Das Festlegen der in diesem Grundgeräusch auftretenden Störfrequenzen kann anhand vorbestimmter Schwellwerte der Amplitude einzelner Frequenzlinien automatisch erfolgen oder/und auch manuell durch Begutachtung des grafisch dargestellten Signals erfolgen.

Gemäß einer abgewandelten Ausführungsform können beim Festlegen bzw. Bestimmen der Störfrequenzen auch die Eigenschaften der Signalübertragungskette berücksichtigt werden. Insbesondere können z. B. Resonanzfrequenzen eines Lautsprechers, der zum Einkoppeln der akustischen Signale in z. B. die Rohrleitung benutzt wird, als Störfrequenzen behandelt und aus dem zu erzeugenden Vorläufersignal bzw. dem Erregersignal ausgeschlossen werden. Ebenso kann der Frequenzgang der Sensoren, welche die reflektierten Signale aufnehmen, bei der Festlegung der Störfrequenzen berücksichtigt werden, indem das Vorläufersignal und später das Erregersignal entsprechend optimal angepasst werden.

Es ist verständlich, dass die nachfolgenden Messungen deutlich empfindlicher und genauer ausgeführt werden können, wenn man diese Störfrequenzen ausblendet. Die Erfindung geht über ein solches Ausblenden aber hinaus, indem für die eigentliche Messung ein Erregersignal generiert wird, welches die Störfrequenzen gar nicht erst enthält. Dazu wird in einem weiteren Schritt des erfindungsgemäßen Verfahrens ein Vorläufersignal erzeugt, über den festgelegten Erregerfrequenzbereich aber unter Ausklammerung der Störfrequenzen. Damit lässt sich die gesamte Signalenergie in die Frequenzbereiche lenken, die im Rahmen der Messung ausgewertet werden können. Das Vorläufersignal ist somit ein breitbandiges Sendesignal (z. B. 5 Hz ... 300 Hz) ohne die Störfrequenzen. Bei abgewandelten Ausführungen wird das Vorläufersignal (und später auch das Erregersignal) schmalbandiger gewählt, beispielsweise im Bereich 5 Hz bis 50 Hz, um mehr Sendeleistung im für spezifische Anwendungen interessierenden Frequenzbereich konzentrieren zu können.

Die Erzeugung der für die Messung erforderlichen akustischen Signale, d. h. des Vorläufersignals und des Erregersignals (siehe dazu weiter unten) erfolgt bevorzugt auf digitalem Weg, indem die Signale durch eine entsprechende Software in einem Rechner (Mikrocontroller, digitaler Signalprozessor, FPGA usw.) berechnet werden.

Im nächsten Schritt des Verfahrens erfolgt das Einkoppeln des derart erzeugten Vorläufersignals in die Rohrleitung und das Empfangen eines aus der Rohrleitung reflektierten Vorläufer-Reflexionssignals. Vorzugsweise wird das Vorläufersignal (ebenso später das Erregersignal) über einen Digital-Analog-Umsetzer in ein analoges Signal umgewandelt und in die Rohrleitung, insbesondere in den Rohrinnenraum eingekoppelt. Das Einkoppeln erfolgt beispielsweise mit Hilfe eines oder mehrerer Lautsprecher. Über geeignete akustische Sensoren (z. B. Mikrofone), die sich an unterschiedlichen Stellen des Rohres befinden können, wird das reflektierte und dabei vom Rohr beeinflusste Vorläufer-Reflexionssignal erfasst.

Im nachfolgenden Schritt wird zum Bestimmen von Dämpfungsfrequenzen, bei denen das Vorläufersignal auf dem Messweg entlang der Rohrleitung stärker gedämpft wird als die durchschnittliche Dämpfung des gesamten Vorläufersignals, das Vorläufersignal mit dem Vorläufer-Reflexionssignal verglichen. Bevorzugt wird das Vorläufer-Reflexionssignal dazu mit Hilfe eines AD-Wandlers in ein Digitalsignal umgewandelt und der Vergleich mit dem Vorläufersignal erfolgt wieder durch entsprechende Software/Algorithmen in einem geeigneten Rechner (Mikrocontroller, digitaler Signalprozessor, FPGA).

Durch das Einkoppeln des Vorläufersignals und die Auswertung des Vorläufer-Reflexionssignals kann ermittelt werden, welche Signalanteile entlang der Rohrleitung gut übertragen werden und welche Signalanteile stark gedämpft oder sogar ausgelöscht werden.

Im sich anschließenden Schritt des erfindungsgemäßen Verfahrens wird ein Erregersignal über den Erregerfrequenzbereich erzeugt, unter Ausklammerung der zuvor bestimmten bzw. festgelegten Störfrequenzen und der ebenfalls bestimmten Dämpfungsfrequenzen. Das derart erzeugte endgültige Erregersignal ist somit breitbandig im Erregerfrequenzbereich und verzichtet gleichzeitig auf mindestens eine gezielt ausgesparte Frequenz, im Regelfall mehrere Frequenzen, die als Störfrequenzen oder als Dämpfungsfrequenzen zuvor bestimmt wurden. Dadurch kann die Energie des Erregersignals auf genau die Frequenzbereiche konzentriert werden, in denen weder Störfrequenzen noch Dämpfungsfrequenzen liegen.

Im folgenden Verfahrensschritt wird das so erzeugte Erregersignal in die Rohrleitung eingekoppelt und ein aus der Rohrleitung reflektiertes Messsignal empfangen. Einkoppeln und Empfangen erfolgt wieder mit Hilfe der oben bereits erwähnten Lautsprecher bzw. Sensoren. In einer bevorzugten Ausführungsform kann der Lautsprecher im Umkehrmodus auch als Mikrofon betrieben werden, sodass keine eigenständigen Sensoren benötigt werden.

In einem letzten Schritt erfolgt die Auswertung des reflektierten Messsignals mithilfe geeigneter Ausverteverfahren. In an sich bekannter Weise - aber mit erfindungsgemäß gesteigerter Genauigkeit - lassen sich unterschiedliche Parameter/Eigenschaften der Rohrleitung bzw. des zugehörigen Leitungssystem bestimmen. Solche Parameter können beispielsweise sein:

- spezielle akustische Übertragungsverhältnisse im Rohr,
- Stoßstellen,
- sonstige Reflexionen im Rohr oder am Rohrende,
- akustische Eigenschaften von im Rohr befindlichen Medien, wie Dämpfung/Absorption, Schallgeschwindigkeit, Laufzeiten usw.

Aus diesen akustischen Parametern lässt sich wiederum je nach Einsatzgebiet, auf Stoffeigenschaften, Ausbreitungsbedingungen, Verschmutzungsgrad, Leckagen usw. schließen.

Ein wesentlicher Unterschied zwischen Messverfahren nach dem Stand der Technik und dem erfindungsgemäßen Verfahren besteht demnach darin, dass Störsignale nicht nur im Empfangszweig ausgeblendet bzw. ausgefiltert werden, sondern dass die Störfrequenzen und ggf. Dämpfungsfrequenzen auch im Erregersignal gar nicht erst enthalten sind. Die zur Messung verfügbare Energie, welche mit dem Erregersignal in das zu messende System eingekoppelt werden muss, kann dadurch auf die Frequenzbereiche verteilt, die im System (Rohrleitung) gut übertragen und ausgewertet werden können.

Gemäß einer zweckmäßigen Ausführungsform wird das Verfahren fortlaufend durchgeführt, um Rohrleitungen laufend zu überwachen. Dabei können die einmal festgelegten Störfrequenzen und Dämpfungsfrequenzen in mehreren Messzyklen konstant gehalten werden, da kurzfristige Änderungen dieser Störgrößen nicht zu erwarten sind. In einer abgewandelten Ausführungsform kann es aber auch sinnvoll sein, dass die Bestimmung der Stör- und Dämpfungsfrequenzen in vorbestimmten Abständen neu erfolgt, um beispielsweise die Drehzahlregelung von Motoren, geänderte Frequenzen eines Frequenzumrichters und dergleichen berücksichtigen zu können.

Gemäß einer abgewandelten Ausführungsform kann aus dem Erregersignal ein Testsignal erzeugt werden. Dazu wird eine Testfrequenz ausgewählt, welche innerhalb des Erregerfrequenzbereichs liegt und ungleich der festgestellten Störfrequenzen ist. Die Testfrequenz korreliert mit periodischen Reflexionsstellen in der Rohrleitung und kann aus dem Messsignal bestimmt werden. Der Abstand zwischen periodisch wiederkehrenden Reflexionsstellen, z. B. Nahtstellen zwischen gleich langen Rohrabschnitten, ist bekannt, sodass durch Einkoppeln des schmalbandigen Testsignals eine hohe Leistungsdichte erreicht werden kann. Aus den auftretenden Reflexionen lässt sich dann unter Berücksichtigung des Abstands z. B. die Ausbreitungsgeschwindigkeit ermitteln.

Das erfindungsgemäße Verfahren umfasst die Erzeugung eines Erregersignals für eine akustische Messung entlang von Rohrleitungen. Dieser Teilabschnitt des Verfahrens startet mit der Festlegung eines breitbandigen Erregerfrequenzbereichs, in welchem ein Erregersignal erzeugt werden soll. Im nächsten Schritt werden Störfrequenzen festgelegt, welche im Erregersignal nicht enthalten sein sollen. Schließlich wird das Erregersignal über den Erregerfrequenzbereich und unter Auslassung der Störfrequenzen erzeugt. Weiterhin wird nach der Festlegung der Störfrequenzen ein Vorläufersignal über den Erregerfrequenzbereich unter Auslassung der Störfrequenzen erzeugt. Es folgt das Einkoppeln des Vorläufersignals in eine zu messende Rohrleitung und das Empfangen eines aus der Rohrleitung reflektierten Vorläufer-Reflexionssignals. Durch Vergleichen des Vorläufersignals mit dem Vorläufer-Reflexionssignal werden Dämpfungsfrequenzen bestimmt, bei denen das Vorläufersignal auf dem Messweg entlang der Rohrleitung stärker gedämpft wird als die durchschnittliche Dämpfung des gesamten Vorläufersignals. Beim abschließenden Erzeugen des Erregersignals werden sowohl die Störfrequenzen als auch die Dämpfungsfrequenzen ausgelassen. Einzelheiten zur Erzeugung des Erregersignals ergeben sich aus der oben angeführten Beschreibung des Verfahrens zur akustischen Messung entlang langer Rohrleitungen sowie den zugehörigen Ausführungsformen, die auch hier entsprechend anwendbar sind.

Das erfindungsgemäß erzeugte Erregersignal unterscheidet sich deutlich von den für gleiche Anwendungen häufig genutzten Impulsverfahren, bei denen eine breitbandige Anregung erfolgt unter Inkaufnahme des Verlustes eines großen Teils der zur Messung verfügbaren Energie aufgrund der erforderlichen Filterung beim Empfang des reflektierten Signals. Ebenso besteht ein deutlicher Unterschied zu Verfahren, wie sie z. B. im oben genannten Patent EP 2 169 179 B1 angewendet werden, denn dort wird ein durchlaufender Chirp mit unterer und oberer Frequenz verwendet, ohne dass mehrere Frequenzbereiche unter Ausklammern zuvor bestimmter Störfrequenzen berücksichtigt werden können.

Als erforderlich für die Erzeugung des Erregersignals aber vorzugsweise auch des Vorläufersignals hat es sich erwiesen, einen sogenannten Multisinus-Burst zu verwenden. Bei einem Multisinus-Burst können mit bekannten Algorithmen der Signalverarbeitung sowohl die Dauer als auch die Signalform in der gewünschten Weise angepasst werden, um einzelne Frequenzen - nämlich die Störfrequenzen und die Dämpfungsfrequenzen - aus einem breitbandigen Signal auszulassen.

Weitere Vorteile und Einzelheiten der Erfindung ergeben sich aus der nachfolgenden Beschreibung einer bevorzugten Ausführungsform, unter Bezugnahme auf die Zeichnung. Es zeigen:

Fig. 1    Schritte des erfindungsgemäßen Verfahrens als Ablaufplan und zugehörige Signalverläufe;

Fig. 2    ein Spektrum eines Multisinus-Signals mit beliebigen Spektralkomponenten;

Fig. 3    Zeitverlauf eines aus drei Sinuskomponenten bestehenden Multisinus-Signals;

Fig. 4    Zeitverlauf und Spektrum eines Sinus-Burst;

Fig. 5    Zeitverlauf und Spektrum eines Multisinus-Burst;

Fig. 6    Zeitverlauf und Spektrum eines Multisinus-Bursts bei dem die Sinuskomponente $f_2$ um 180° verschoben wurde;

Fig. 7    Ablaufplan zur Optimierung eines Multisinus-Burst;

Fig. 8    beispielhafte Signalverläufe, wie sie in den Schritten gemäß Fig. 6 auftreten;

Fig. 9    Zeitverlauf und Spektrum des optimierten Multisinus-Burst;

Fig. 10 A-C    Vergleich klassisches Impulsverfahren, Verfahren mit sich ändernder Frequenz (Chirp) und Multisinus-Burst mit mehreren Frequenzbändern.

Die nachfolgend beispielhaft beschriebene bevorzugte Ausführungsform basiert auf der Verwendung eines breitbandigen Multisinus-Burst als Erregersignal, wobei der Multisinus-Burst ein erfindungsgemäß optimiertes Spektrum besitzt, um die Störfrequenzen und ggf. die Dämpfungsfrequenzen gezielt auszuschließen.

Ein Multisinus ist ein breitbandiges periodisches Signal, bei welchem die spektrale Leistung der einzelnen Frequenzkomponenten einfach vorgeben werden können.

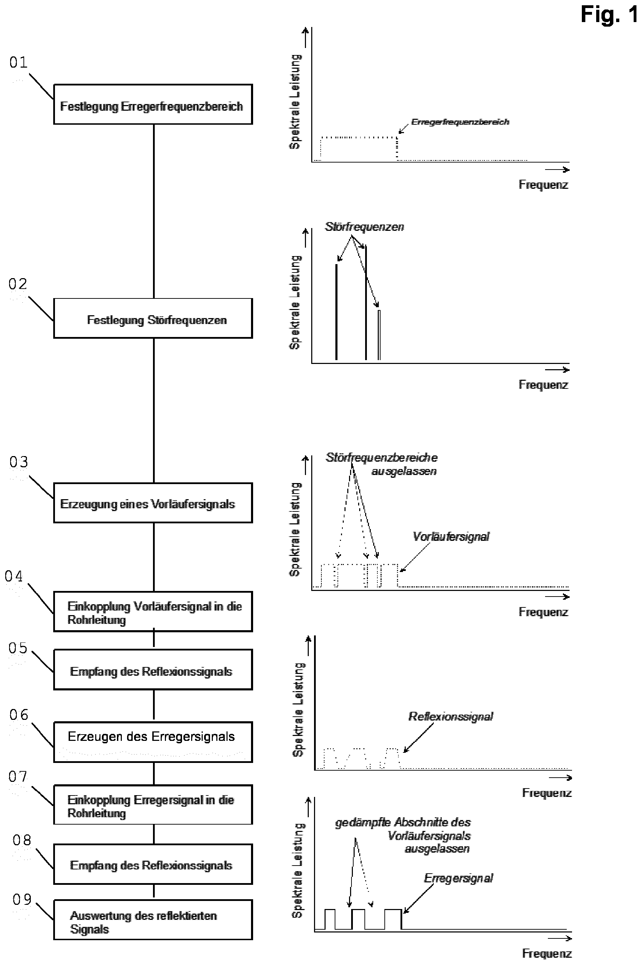

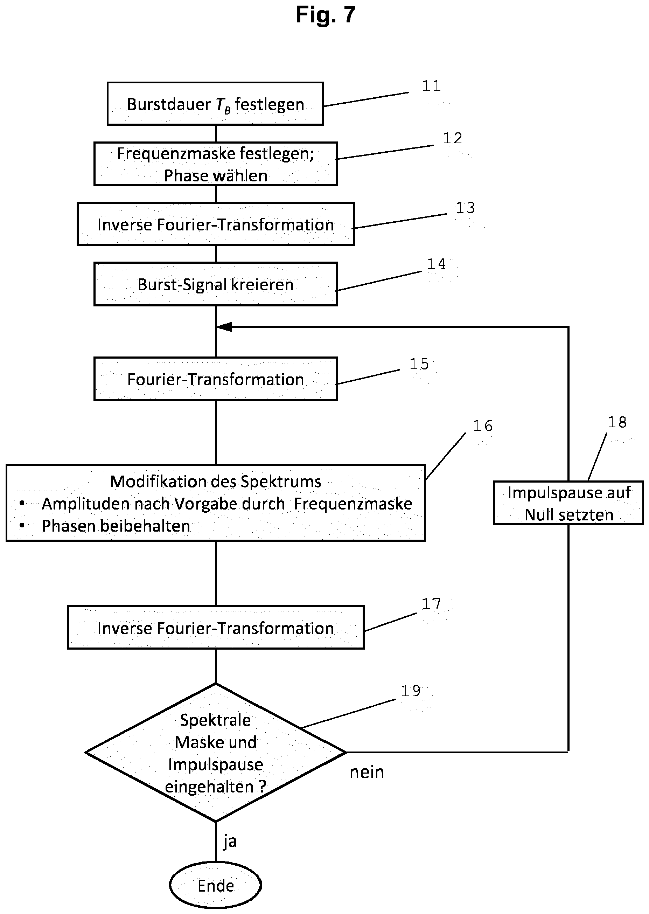

Fig. 1 zeigt wesentliche Schritte des erfindungsgemäßen Verfahrens als Ablaufplan und die zugehörigen Signalverläufe in vereinfachter Form. Das Verfahren zur akustischen Messung, insbesondere von Reflexionsstellen, in bzw. entlang von langen Rohrleitungen startet im Schritt 01 mit der Festlegung eines breitbandigen Erregerfrequenzbereichs, in welchem ein gewünschtes Erregersignal gebildet werden soll. Im Schritt 02 werden Störfrequenzen festgelegt bzw. definiert, welche im Erregersignal nicht enthalten sein sollen. Im Schritt 03 folgt das Erzeugen eines Vorläufersignals über den Erregerfrequenzbereich unter Auslassung der zuvor festgelegten Störfrequenzen. Im Schritt 04 erfolgt ein Einkoppeln des erzeugten Vorläufersignals in eine zu untersuchende Rohrleitung. Im Schritt 05 wird ein aus der Rohrleitung reflektiertes Vorläufer-Reflexionssignals empfangen. Im Schritt 06 wird das eigentlich gewünschte Erregersignal erzeugt, wofür ein Vergleichen des Vorläufersignals mit dem Vorläufer-Reflexionssignal und ein Bestimmen von Dämpfungsfrequenzen, bei denen das Vorläufersignal auf dem Messweg entlang der Rohrleitung stärker gedämpft wird als die durchschnittliche Dämpfung des gesamten Vorläufersignals erfolgt und wobei das Erzeugen des Erregersignals über den Erregerfrequenzbereich erfolgt, unter Auslassung der Störfrequenzen und der Dämpfungsfrequenzen. Die Einzelheiten zur Erzeugung des Erregersignals werden unten mit Bezugnahme auf Fig. 7 näher beschrieben. Im Schritt 07 wird das erzeugte Erregersignal in die Rohrleitung eingekoppelt. Im Schritt 08 folgt das Empfangen eines aus der Rohrleitung reflektierten Messsignals. Und schließlich folgt im Schritt 09 eine Auswertung des reflektierten Messsignals mithilfe geeigneter Auswerteverfahren.

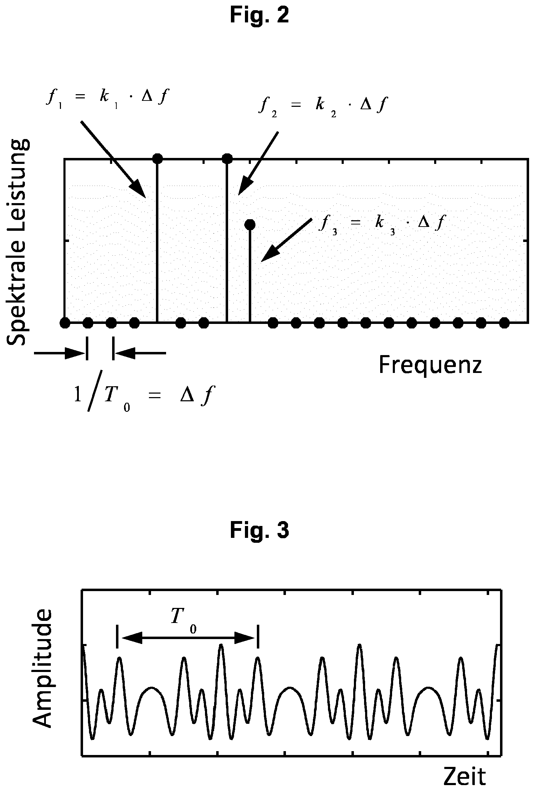

Fig. 2 zeigt die Vorgehensweise anhand des Spektrums eines Multisinussignals mit beliebigen Spektralkomponenten. Geht man von einer Periodendauer des Multisinussignals von $T_0$ aus, so kann man mehrere Sinussignale innerhalb dieser Zeitdauer unterbringen sofern das ganzzahlige Vielfache der Periodendauer $T_s$ der Sinussignale der Periodendauer $T_0$ des Multisinussignals entspricht. Es muss also gelten:

$$kT_s = T_0 \text{ oder } T_0 f_s = k$$

$f_s$ ist hierbei die Frequenz der entsprechenden Sinuskomponente. Man kann demzufolge beliebig viele Sinuskomponenten im Gesamtsignal unterbringen, solange deren Frequenz ein ganzzahliges Vielfache von $\Delta f = 1/T_0$ ist. In Fig. 1 sind die erlaubten Frequenzen durch kleine kreisrunde Flächen gekennzeichnet. In dem gezeigten Beispiel werden aber nur 3 der möglichen Frequenzen auch tatsächlich genutzt. Die Stärke der einzelnen Sinuskomponenten ist durch die Höhe der Spektrallinien vorgebbar. Im Beispiel sind zwei Sinussignale gleichstark, eine dritte ist etwas schwächer gewählt worden.

Fig. 3 zeigt das Zeitsignal, welches sich aus der Überlagerung der drei in Fig. 1 gewählten Sinuskomponenten ergibt. Es ist über drei Perioden dargestellt. In dem gezeigten Fall sind die einzelnen Spektrallinien unabhängig voneinander, so dass man sich sehr flexibel ein beliebiges Leistungsspektrum vorgeben kann. Durch inverse Fourier-Transformation kann daraus das Zeitsignal berechnet werden, welches über einen DA-Wandler schließlich in ein Spannungssignal mit dem vorgegebenen Spektrum gewandelt wird.

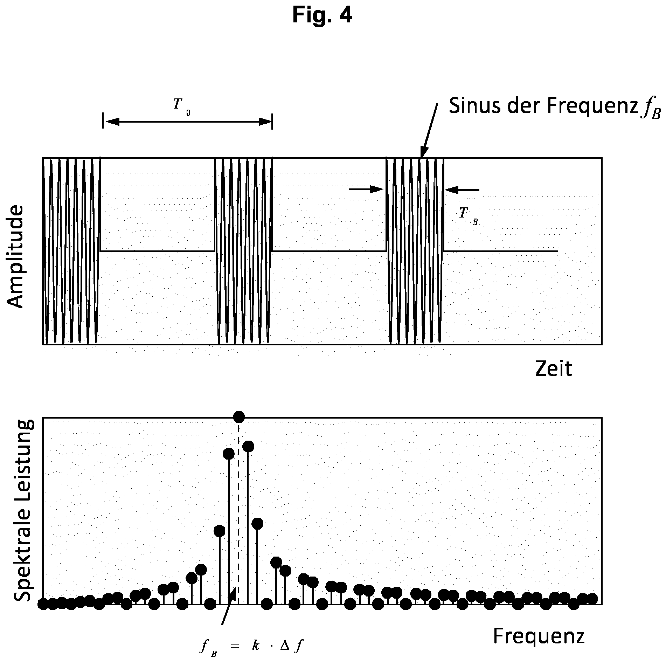

Fig. 4 zeigt den Zeitverlauf und das Spektrum eines Sinus-Burst. Im Falle eines Burst-Signals ist die zuvor genannte Unabhängigkeit der Spektrallinien nicht mehr gegeben. Ein Sinussignal der Frequenz $f_B$ wird nur während des Zeitintervalls $T_B$ ausgesendet. Das Spektrum dieses Signals besteht nun nicht nur aus der einzelnen Spektrallinie der Frequenz $f_B$ (gestrichelte Linie) sondern streut über einen bestimmten Bereich um diese Frequenz. Je kleiner man $T_B$ wählt, umso stärker ist diese Streuung.

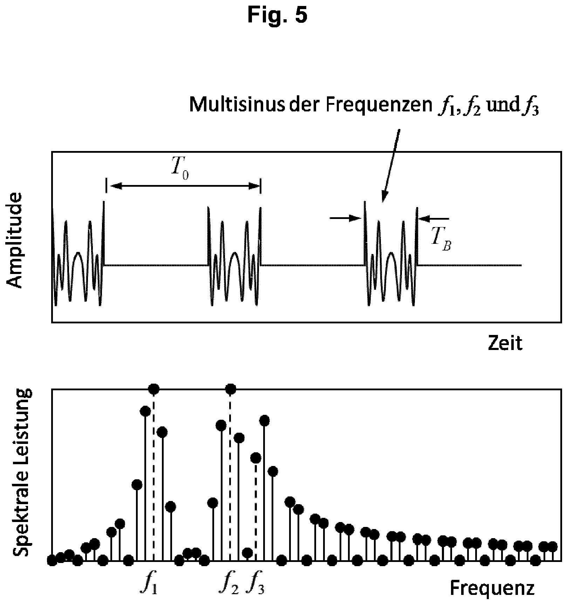

Fig. 5 zeigt den Zeitverlauf und das Spektrum eines Multisinus-Burst, wobei das Burst-Signal aus den gleichen Sinuskomponenten wie in Fig. 1 gezeigt besteht. Die gewollten Sinuskomponenten sind durch gestrichelte Linien markiert. Es entsteht eine Reihe von Spektralkomponenten, die ursprünglich nicht beabsichtigt waren. Diese entstehen aus der Überlagerung der Einzelspektren (siehe untere Abbildung in Fig. 3) der Sinusbursts mit unterschiedlichen Frequenzen. Das resultierende Gesamtspektrum ist daher schlecht vorhersagbar.

Verändert man die Phasenlage der drei Sinuskomponenten zueinander, kann sich ein anderes Gesamtspektrum ergeben, da sich Spektralkomponenten konstruktiv oder destruktiv überlagern können.

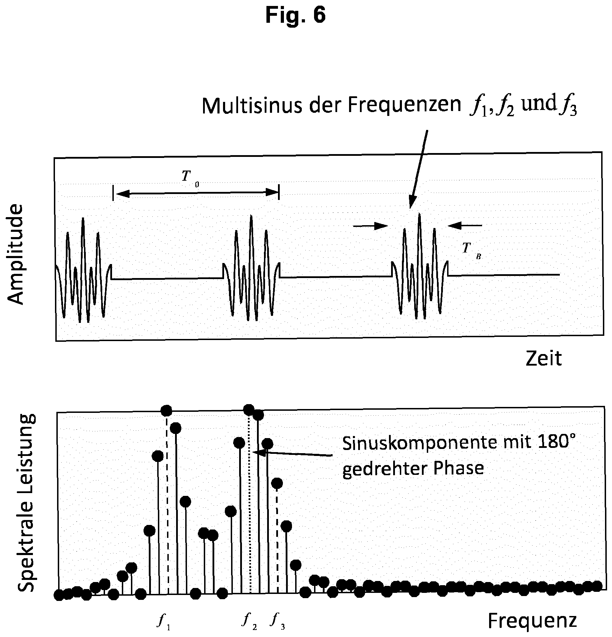

Fig. 6 zeigt den Zeitverlauf und das Spektrum eines Multisinus-Burst, bei dem die Sinuskomponente $f_2$ um 180° verschoben wurde. Beim dargestellten Beispiel ist man von den gleichen Sinuskomponenten wie in Fig. 4 ausgegangen. Es wurde lediglich die Phase der Frequenzkomponente $f_2$ um 180° gedreht. Wie ersichtlich, hat die Veränderung der Phasenlage zu einer erheblichen Modifikation des Gesamtspektrums geführt. Daraus lässt sich ableiten, dass sich durch eine geeignete Wahl der Phasen der Sinuskomponenten auch für Burst-Signale eine vorgegebene Frequenzmaske zumindest näherungsweise einhalten lässt. Infolge der Überlagerung sehr vieler Spektrallinien ist die Bestimmung geeigneter Phasenwerte ein komplexes Optimierungsproblem. Eine Möglichkeit zur näherungsweisen Lösung dieses Optimierungsproblems besteht in einem iterativen Verfahren, wie es im Folgenden beschrieben ist.

Fig. 7 zeigt einen Ablaufplan zur näherungsweisen Lösung des zuvor genannten Optimierungsproblems mit Illustration typischer Signalverläufe und Spektren. Der Ablauf umfasst die folgenden Schritte:

11. Festlegen der Burst-Dauer $T_B$.
12. Festlegen der Frequenzmaske des Multisinus-Testsignals. Im Beispiel soll das Signal nur Spektralkomponenten innerhalb der Bereiche B1 und B2 haben.
13. Bestimmung des Zeitsignals mittels inverser Fourier-Transformation. Die Phasen der einzelnen Spektralkomponenten können dabei zufällig gewählt werden.
14. Anfügen von Nullen bis auf die gewünschte Signallänge $T_0$, um ein Burst-Signal zu bekommen.
15. Berechnung des komplexen Amplitudenspektrums des Bursts mittels Fourier-Transformation.
16. Da das Spektrum von der beabsichtigten Form abweicht, sind die Amplituden der Spektralkomponenten wieder so zu setzen wie unter Schritt 12 festgelegt. Als Phasenwinkel sind aber jene Werte beizubehalten, wie sie sich im Spektrum nach Schritt 15 ergeben haben.
17. Bestimmung des Zeitsignals mittels inverser Fourier-Transformation.
18. Durch die Änderungen im Amplitudenspektrum besitzt das Signal nun keine ausgeprägte Impulspause mehr. Um diese wiederherzustellen, werden alle dazugehörigen Signalkomponenten zu Null gesetzt.
19. Mit diesem Signal springt man zurück zu Schritt 15 und wiederholt den Vorgang solange bis die spektrale Maske und die Impulspause mit einer vorzugebenden Genauigkeit eingehalten werden.

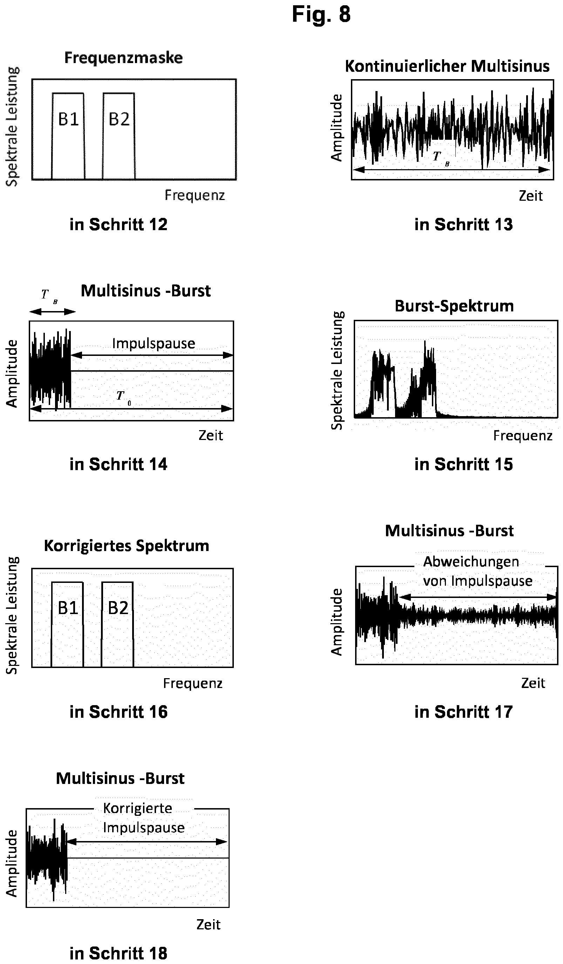

Fig. 8 zeigt beispielhafte Signalverläufe, wie sie in den zuvor beschrieben Schritten auftreten.

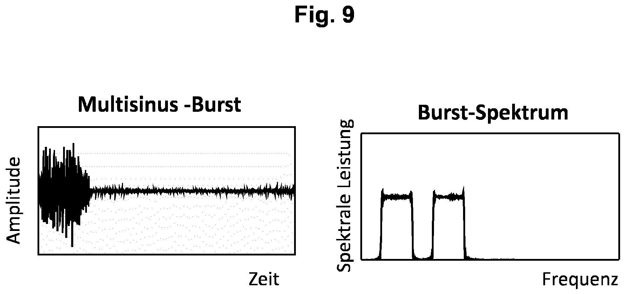

Fig. 9 zeigt den Zeitverlauf und das Spektrum des optimierten Multisinus-Burst, somit also das Ergebnis der Optimierung gemäß Fig. 6. Bis auf geringe Abweichungen hält das Testsignal sowohl die spektrale wie auch die zeitliche Maske ein.

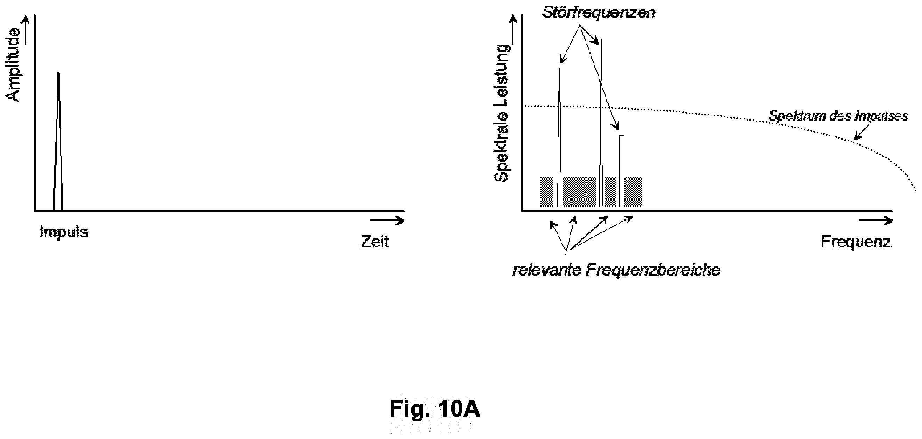

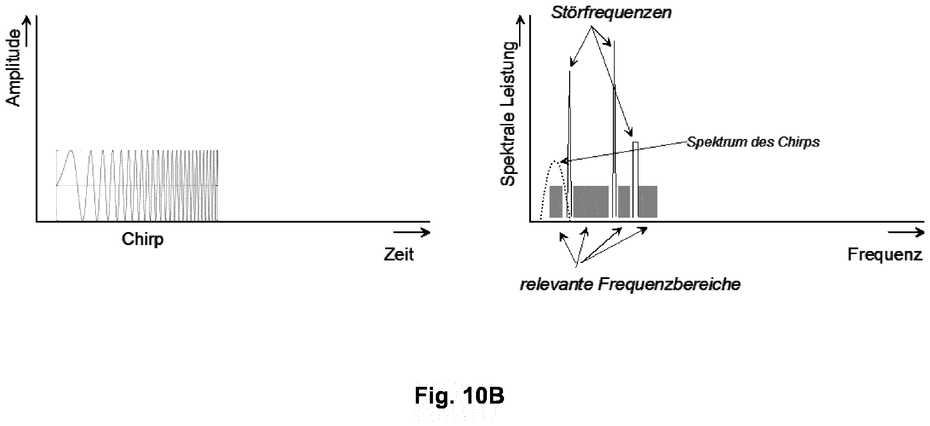

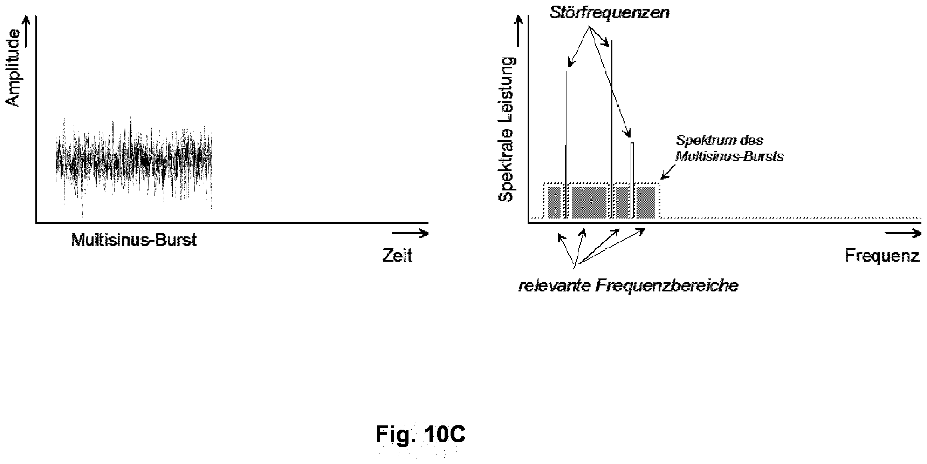

Fig. 10 zeigt zur abschließenden Verdeutlichung der Unterscheide zwischen der vorliegenden Erfindung und den vorbekannten Verfahren jeweils den Signalverlauf im Vergleich zum klassischen Impulsverfahren (Fig. 10A), Verfahren mit sich ändernder Frequenz (Chirp von $f_u$ bis $f_o$) (Fig. 10B) und das erfindungsgemäße Verfahren Multisinus-Burst mit mehreren Frequenzbändern (Fig. 10C).

Da der Fachmann beispielsweise aus der oben zitierten EP 2 169 179 B1 detaillierte Anweisungen zum Aufbau einzelner Einheiten einer geeigneten Vorrichtung sowie zu mathematischen und messtechnischen Verfahrensweisen bei der Signalanalyse entnehmen kann, wird hier auf die Wiederholung dieser vorbekannten Aspekte weitgehend verzichtet.

## Patentansprüche

1. Verfahren zur akustischen Messung in oder entlang einer Rohrleitung, folgende Schritte umfassend:

   - Festlegung (01) eines breitbandigen Erregerfrequenzbereichs, in welchem ein Erregersignal erzeugt werden soll;
   - Festlegung (02) von Störfrequenzen, welche im Erregersignal nicht enthalten sein sollen;
   - Erzeugen (03) eines Vorläufersignals über den Erregerfrequenzbereich unter Auslassung der Störfrequenzen;
   - Einkoppeln (04) des Vorläufersignals in die Rohrleitung und Empfangen (05) eines aus der Rohrleitung reflektierten Vorläufer-Reflexionssignals;
   - Vergleichen des Vorläufersignals mit dem Vorläufer-Reflexionssignal und Bestimmen von Dämpfungsfrequenzen, bei denen das Vorläufersignal auf dem Messweg entlang der Rohrleitung stärker gedämpft wird als die durchschnittliche Dämpfung des gesamten Vorläufersignals;
   - Erzeugen (06) eines Erregersignals über den Erregerfrequenzbereich unter Auslassung der Störfrequenzen und der Dämpfungsfrequenzen;
   - Einkoppeln (07) des Erregersignals in die Rohrleitung und Empfangen (08) eines aus der Rohrleitung reflektierten Messsignals;
   - Auswertung (09) des reflektierten Messsignals mithilfe geeigneter Auswerteverfahren,

   wobei das Erregersignal als Multisinus-Burst durch folgende Schritte erzeugt wird:

   11. Festlegen einer Burst-Dauer $T_B$;
   12. Festlegen einer Frequenzmaske des Multisinus-Testsignals;
   13. Bestimmung des Zeitsignals mittels inverser Fourier-Transformation;
   14. Anfügen von Nullen bis auf die gewünschte Signallänge $T_0$, um ein Burst-Signal zu bekommen;
   15. Berechnung des komplexen Amplitudenspektrums des Bursts mittels Fourier-Transformation;
   16. Modifikation des Spektrums durch Setzen der Amplituden der Spektralkomponenten, so wie sie im Schritt 12 festgelegt wurden, unter Beibehaltung der Werte der Phasenwinkel, wie sie sich im Spektrum nach Schritt 15 ergeben haben;
   17. Bestimmung des Zeitsignals mittels inverser Fourier-Transformation;
   18. Wiederherstellen der Impulspause durch Setzen aller dazugehörigen Signalkomponenten zu Null;
   19. Rücksprung zu Schritt 15 und Wiederholen der Schritte bis die spektrale Maske und die Impulspause mit einer vorzugebenden Genauigkeit eingehalten werden.

2. Verfahren nach Anspruch 1, **dadurch gekennzeichnet, dass** auch das Vorläufersignal als Multisinus-Burst erzeugt wird.

3. Verfahren nach Anspruch 1 oder 2, **dadurch gekennzeichnet, dass** der Erregerfrequenzbereich im Bereich zwischen 1 Hz bis 1 kHz festgelegt wird, vorzugsweise sich von einer unteren Grenzfrequenz $f_u$ = 5 Hz bis zu einer oberen Grenzfrequenz $f_o$ = 300 Hz erstreckt.

4. Verfahren nach einem der Ansprüche 1 bis 3, **dadurch gekennzeichnet, dass** zum Festlegen von Störfrequenzen eine Messung akustischer Störsignale, die an der Rohrleitung ohne Einkopplung des Vorläufer- oder Erregersignals auftreten, erfolgt, wobei die Frequenzen der gemessenen Störsignale oberhalb einer vorbestimmten Störsignalschwelle als Störfrequenzen festgelegt werden.

5. Verfahren nach einem der Ansprüche 1 bis 4, **dadurch gekennzeichnet, dass** als Dämpfungsfrequenzen diejenigen Frequenzen bestimmt werden, bei welchen die Dämpfung mindestens um den Faktor 2 größer ist als die durchschnittliche Dämpfung des Vorläufersignals.

6. Verfahren nach einem der Ansprüche 1 bis 5, **dadurch gekennzeichnet, dass** ein Testsignal erzeugt wird, welches eine innerhalb des Erregerfrequenzbereichs liegende Frequenz aufweist, die mit periodischen Reflexionsstellen in der Rohrleitung korreliert, und dass das Testsignal in der Rohrleitung eingekoppelt wird, um unter Berücksichtigung eines bekannten Abstands zwischen den periodischen Reflexionsstellen die Ausbreitungsgeschwindigkeit zu bestimmen.

7. Vorrichtung zur akustischen Messung in oder entlang einer Rohrleitung, umfassend:

> - eine Einheit zur Erzeugung eines Erregersignals;
> - einen Schallerzeuger zur Einkopplung des erzeugten Erregersignals in den Hohlraum;
> - einen Sensor zur Erfassung eines aus dem Hohlraum reflektierten Messsignals;
> - eine Analyseeinheit zur Auswertung des Messsignals;

> **dadurch gekennzeichnet, dass** die Analyseeinheit konfiguriert ist, um ein Verfahren gemäß einem der Ansprüche 1 bis 6 auszuführen.

**Claims**

1. A method for acoustic measuring in or along a pipeline, comprising the steps of:

> - establishing (01) a broadband exciter frequency range in which an exciter signal is to be generated;
> - establishing (02) interference frequencies which shall not be included in the exciter signal;
> - generating (03) a precursor signal over the exciter frequency range with the omission of the interference frequencies;
> - coupling (04) the precursor signal into the pipeline and receiving (05) a precursor reflection signal reflected from the pipeline;
> - comparing the precursor signal with the precursor reflection signal and determining damping frequencies at which the precursor signal on the measuring path along the pipeline is damped much more than the average damping of the entire precursor signal;
> - generating (06) an exciter signal over the exciter frequency range with the omission of the interference frequencies and the damping frequencies;
> - coupling (07) the exciter signal into the pipeline and receiving (08) a measuring signal reflected out of the pipeline;
> - evaluating (09) the reflected measuring signal using suitable evaluation methods,

wherein the exciter signal is generated as a multi-sine burst by the following steps:

> 11. Establishing a burst duration $T_B$;
> 12. Establishing a frequency mask of the multi-sine test signal;
> 13. Determining the time signal by means of inverse Fourier transform;
> 14. Adding zeros to the desired signal length $T_0$ to get a burst signal;
> 15. Calculating the complex amplitude spectrum of the burst by means of Fourier transform;
> 16. Modifying the spectrum by setting the amplitudes of the spectral components as established in step 12 with retaining the values of the phase angles as they resulted in the spectrum according to step 15;
> 17. Determining the time signal by means of inverse Fourier transform;
> 18. Restoring the pulse pause by setting all related signal components to zero;
> 19. Jumping back to step 15 and repeating the steps until the spectral mask and the pulse pause are complied with an accuracy to be specified.

2. The method according to claim 1, **characterized in that** the precursor signal is also generated as a multi-sine burst.

3. The method according to claim 1 or 2, **characterized in that** the exciter frequency range is established in the range of 1 Hz to 1kHz, preferably ranging from a lower cut-off frequency $f_u$ = 5Hz up to an upper cut-off frequency $f_o$ = 300 Hz.

4. The method according to one of the claims 1 to 3, **characterized in that** the measuring acoustic interference signals occurring at the pipeline without coupling of the precursor or the exciter signal, is carried out for establishing interference frequencies, wherein the frequencies of the measured interference signals are established above a predetermined interference signal threshold as interference frequencies.

5. The method according to one of the claims 1 to 4, **characterized in that** those frequencies are determined as the damping frequencies for which the damping is at least greater by a factor of 2 than the average damping of the precursor signal.

6. The method according to one of the claims 1 to 5, **characterized in that** a test signal is generated which has a frequency within the exciter frequency range which frequency correlates with periodic reflection points in the pipeline, and **in that** the test signal is coupled into the pipeline in order to determine the speed of propagation taking into account a known distance between the periodic reflection points.

**7.** A device for acoustic measuring in or along a pipeline, comprising:

- a unit for generating an exciter signal;
- a sound generator for coupling the exciter signal generated into the hollow space;
- a sensor for detecting a measuring signal reflected from the hollow space;
- an analysis unit for evaluating the measuring signal;

**characterized in that** the analysis unit is configured to carry out a method according to one of the claims 1 to 6.

## Revendications

**1.** Procédé de mesure acoustique dans ou le long d'une conduite, comprenant les étapes suivantes:

- définition (01) d'une gamme de fréquences d'excitation à large bande, dans laquelle un signal d'excitation doit être produit,
- définition (02) de fréquences parasites, lesquelles ne doivent pas être contenues dans le signal d'excitation,
- production (03) d'un signal précurseur sur la gamme de fréquences d'excitation en omettant les fréquences parasites,
- injection (04) du signal précurseur dans la conduite et réception (05) d'un signal de réflexion précurseur renvoyé de la conduite,
- comparaison du signal précurseur au signal de réflexion précurseur et détermination des fréquences d'amortissement pour lesquelles le signal précurseur est amorti sur la trajectoire de mesure le long de la conduite plus fortement que l'amortissement moyen de tout le signal précurseur,
- production (06) d'un signal d'excitation sur la gamme de fréquences d'excitation en omettant les fréquences parasites et les fréquences d'amortissement,
- injection (07) du signal d'excitation dans la conduite et réception (08) d'un signal de mesure renvoyé de la conduite,
- évaluation (09) du signal de mesure renvoyé à l'aide du procédé d'évaluation approprié,

sachant que le signal d'excitation est produit en tant que rafale multisinusoïdale par les étapes suivantes:

11. définition d'une durée de rafale $T_B$,
12. définition d'un masque spectral du signal d'essai multisinusoïdal,
13. détermination du signal de temps au moyen de la transformation de Fourier inverse,
14. addition de zéros jusqu'à la longueur de signal $T_0$ souhaitée pour recevoir un signal de rafale,
15. calcul du spectre d'amplitude complexe de la rafale au moyen de la transformation de Fourier,
16. modification du spectre par fixation des amplitudes des composants spectraux telles qu'elles ont été définies dans l'étape 12, en maintenant les valeurs des angles de phase, telles qu'elles ont résulté dans le spectre selon l'étape 15,
17. détermination du signal de temps au moyen de la transformation de Fourier inverse,
18. restauration de la pause d'impulsions par fixation de tous les composants de signal correspondants à zéro,
19. retour à l'étape 15 et répétition des étapes jusqu'à ce que le masque spectral et la pause d'impulsions soient maintenus avec une précision prédéfinie.

**2.** Procédé selon la revendication 1, **caractérisé en ce que** le signal précurseur est également produit en tant que rafale multisinusoïdale.

**3.** Procédé selon la revendication 1 ou 2, **caractérisé en ce que** la gamme de fréquences d'excitation est définie dans une gamme se situant entre 1 Hz et 1 kHz, qui s'étend de préférence d'une fréquence limite inférieure $f_u$ = 5 Hz à une fréquence limite supérieure $f_o$ = 300 Hz.

**4.** Procédé selon l'une quelconque des revendications 1 à 3, **caractérisé en ce que** pour définir des fréquences parasites, a lieu une mesure des signaux parasites acoustiques, qui se produisent sur la conduite sans injection du signal précurseur ou d'excitation, sachant que les fréquences des signaux parasites mesurés au dessus d'un seuil de signal parasite prédéterminé sont définies en tant que fréquences parasites.

**5.** Procédé selon l'une quelconque des revendications 1 à 4, **caractérisé en ce que** comme fréquences d'amortissement, sont déterminées, les fréquences pour lesquelles l'amortissement est au moins d'un facteur 2 plus grand que l'amortissement moyen du signal précurseur.

**6.** Procédé selon l'une quelconque des revendications 1 à 5, **caractérisé en ce qu'**un signal d'essai est produit, lequel comporte une fréquence se situant à l'intérieur de la gamme de fréquences d'excitation, qui est en corrélation avec les points de réflexion périodiques dans la conduite et **en ce que** le signal d'essai est injecté dans la conduite pour déterminer la vitesse de propagation en tenant compte d'une distance connue entre les points de réflexion périodiques.

**7.** Dispositif de mesure acoustique dans ou le long d'une conduite, comprenant:

    - une unité pour la production d'un signal d'excitation,
    - un générateur acoustique pour l'injection dans l'espace creux du signal d'excitation produit,
    - un capteur pour la saisie d'un signal de mesure renvoyé de l'espace creux,
    - une unité d'analyse pour l'évaluation du signal de mesure,

    **caractérisé en ce que** l'unité d'analyse est configurée pour exécuter un procédé selon l'une quelconque des revendications 1 à 6.

**Fig. 1**

01 — Festlegung Erregerfrequenzbereich

Spektrale Leistung ↑

Erregerfrequenzbereich

→ Frequenz

02 — Festlegung Störfrequenzen

Spektrale Leistung ↑

Störfrequenzen

→ Frequenz

03 — Erzeugung eines Vorläufersignals

Spektrale Leistung ↑

Störfrequenzbereiche ausgelassen

Vorläufersignal

→ Frequenz

04 — Einkopplung Vorläufersignal in die Rohrleitung

05 — Empfang des Reflexionssignals

Spektrale Leistung ↑

Reflexionssignal

06 — Erzeugen des Erregersignals

→ Frequenz

07 — Einkopplung Erregersignal in die Rohrleitung

Spektrale Leistung ↑

gedämpfte Abschnitte des Vorläufersignals ausgelassen

08 — Empfang des Reflexionssignals

Erregersignal

09 — Auswertung des reflektierten Signals

→ Frequenz

11

## Fig. 2

$$f_1 = k_1 \cdot \Delta f \qquad f_2 = k_2 \cdot \Delta f$$

$$f_3 = k_3 \cdot \Delta f$$

Spektrale Leistung

Frequenz

$$1\big/ T_0 = \Delta f$$

## Fig. 3

$$T_0$$

Amplitude

Zeit

## Fig. 4

Sinus der Frequenz $f_B$

$T_0$

$T_B$

Amplitude

Zeit

Spektrale Leistung

Frequenz

$$f_B = k \cdot \Delta f$$

# Fig. 5

Multisinus der Frequenzen $f_1, f_2$ und $f_3$

# Fig. 6

Multisinus der Frequenzen $f_1, f_2$ und $f_3$

# Fig. 7

Burstdauer $T_B$ festlegen — 11

Frequenzmaske festlegen; Phase wählen — 12

Inverse Fourier-Transformation — 13

Burst-Signal kreieren — 14

Fourier-Transformation — 15

Modifikation des Spektrums — 16
- Amplituden nach Vorgabe durch Frequenzmaske
- Phasen beibehalten

Impulspause auf Null setzten — 18

Inverse Fourier-Transformation — 17

Spektrale Maske und Impulspause eingehalten ? — 19

nein

ja

Ende

# Fig. 8

**Frequenzmaske**

in Schritt 12

**Kontinuierlicher Multisinus**

in Schritt 13

**Multisinus -Burst**

in Schritt 14

**Burst-Spektrum**

in Schritt 15

**Korrigiertes Spektrum**

in Schritt 16

**Multisinus -Burst**

in Schritt 17

**Multisinus -Burst**

in Schritt 18

# Fig. 9

**Multisinus -Burst**

Amplitude

Zeit

**Burst-Spektrum**

Spektrale Leistung

Frequenz

**Fig. 10A**

EP 3 857 185 B1

Fig. 10B

Fig. 10C

**IN DER BESCHREIBUNG AUFGEFÜHRTE DOKUMENTE**

**In der Beschreibung aufgeführte Patentdokumente**

- EP 2169179 B1
- DE 102004016196 A1
- DE 102012101667 A1